# EUROPÄISCHE PATENTANMELDUNG

(11) **EP 2 184 498 A1**
(43) Veröffentlichungstag der Anmeldung: **12.05.2010**
(21) Anmeldenummer: 09174431.8
(22) Anmeldetag: 29.10.2009
(51) Int. Cl.: F16B 21/00, F16B 39/00

(54) **Verbindungselement zwischen einem Bolzen und einer Mutter**

(30) Priorität: 05.11.2008 DE 102008055868
(71) Anmelder: EJOT GmbH & Co. KG, 57334 Bad Laasphe (DE)
(72) Erfinder: Baumbach, Gerald, 99831 Tabarz (DE)
(74) Vertreter: Bardehle, Heinz

(57) **Zusammenfassung**

Die Erfindung betrifft ein Verbindungselement (3) zur Einstellung des Verdrehmomentes zwischen einem Bolzen (1) und einer auf ihn aufgeschraubten Mutter (2). Das Verbindungselement (3) sitzt mit einem Muttergewinde auf dem Bolzen (1) und verspannt mit radialen Federarmen (5) einen Bund (6) als Bestandteil der Mutter (2) diese axial gegenüber dem Bolzen (1). Die Federarme (5) sind formschlüssig in dem Bund (6) derart gehalten, dass eine Verdrehung der Mutter (2) gegenüber dem Bolzen (1) das Verbindungselement (3) unter Überwindung des Verdrehmomentes mitdreht.

## Beschreibung

Die Erfindung bezieht sich auf ein Verbindungselement zur Einstellung des Verdrehmomentes zwischen einem Bolzen und einer auf ihn aufgeschraubten Mutter.

In der deutschen Offenlegungsschrift 22 15 322 ist ein auf einen Bolzen aufschraubbares Mutterteil beschrieben, das so gestaltet ist, dass sich bei seinem Aufschrauben auf den Bolzen bei Annäherung an ein Ende des Bolzens das hierzu erforderliche Verdrehmoment zunimmt, das Mutterteil sich also zunehmend schwerer auf den Bolzen aufdrehen lässt, so dass bei vollständig auf den Bolzen aufgedrehtem Mutterteil das größte Verdrehmoment aufgewendet werden muss, was zur Folge hat, dass das Zurückdrehen des Mutterteils auch nur mit einem entsprechend hohen Verdrehmoment möglich ist.

Der Erfindung liegt die Aufgabe zugrunde, das Verdrehmoment für das Verdrehen einer Mutter auf einem Bolzen wahlweise auf eine bestimmte Größe einstellen zu können und konstant zu halten. Dies bedeutet auch, dass eine auf einen Bolzen aufgedrehte Mutter jeweils nur bei Aufwendung eines bestimmten vorher eingestellten Verdrehmomentes wieder von dem Bolzen abgedreht werden kann. Erfindungsgemäß geschieht dies dadurch, dass das Verbindungselement mit einem Muttergewinde auf dem Bolzen sitzt und mit radialen Federarmen auf einem Bund als Bestandteil der Mutter dieser axial gegenüber dem Bolzen verspannt, wobei die Federarme formschlüssig in dem Bund derart gehalten sind, dass eine Verdrehung der Mutter gegenüber dem Bolzen das Verbindungselement unter Überwindung des Verdrehmoments mitdreht.

Aufgrund dieser Gestaltung lässt sich durch die Einstellung des Verbindungselementes in Bezug auf den Bund der Mutter jeweils ein gewünschtes Verdrehmoment einstellen, das aufzuwenden ist, wenn die Mutter gegenüber dem Bolzen verdreht werden soll. Solange die Federarme des Verbindungselementes nicht an dem Bund der Mutter anliegen, lässt sich die Mutter frei gegenüber dem Bolzen verdrehen, wobei lediglich die zwischen Mutter und Bolzen sich ergebende Reibung zu überwinden ist. Wenn dann jedoch die Federarme an dem Bund anliegen, dann ergibt sich eine Verspannung des Verbindungselementes gegenüber der Mutter und damit eine Erhöhung der Reibung des Muttergewindes gegenüber dem Bolzengewinde, die von dem Grad der Aufspreizung der Federarme gegenüber dem Bund abhängt, also von der Vorspannung zwischen dem Bund und dem Verbindungselement. Diese Vorspannung bleibt dann bei Verdrehung der Mutter gegenüber dem Bolzen in gleicher Höhe erhalten, da wegen der Verbindung der Federarme des Verbindungselementes mit dem Bund der Mutter der Abstand zwischen Verbindungselement und Bund stets gleich bleibt.

Um die Mitnahme des Verbindungselementes mit seinen Federarmen bei Verdrehung der Mutter zu gewährleisten, sind in dem Bund Nuten vorgesehen, in die die Federarme des Verbindungselementes formschlüssig einrasten, so dass bei Verdrehen der Mutter das Verbindungselement jeweils um den gleichen Drehwinkel mitgenommen wird. Eine bestimmte Einstellung des Verbindungselements gegenüber dem Bund der Mutter bleibt bei Verdrehen der Mutter erhalten, da die Mutter über ihren Bund mit den Nuten die Federarme des Verbindungselementes entsprechend mitnimmt, so dass also der Abstand zwischen Verbindungselement und Bund der Mutter stets gleich bleibt, womit sich durch Einstellung dieses Abstandes durch eine entsprechende Verdrehung des Verbindungselementes gegenüber der Mutter bei willkürlich abgehobenen Federarmen das jeweilige Weiterdrehmoment einstellen lässt.

Die Mutter bildet man zweckmäßig aus Kunststoff aus, da dies den fertigungstechnischen Gegebenheiten entgegen kommt.

In den Figuren sind Ausführungsbeispiele der Erfindung dargestellt. Es zeigen:
- Figur 1: einen Bolzen mit aufgeschraubter Mutter und einem aufgeschraubten Verbindungselement;
- Figur 2: einen Schnitt längs der Linie II-II aus Figur 1;
- Figur 3: den Bolzen und die Mutter gemäß Figur 1, allerdings mit dichter an den Bund der Mutter angeschraubtem Verbindungselement und entsprechend aufgespreizten Federarmen;
- Figur 4: die Gestaltung gemäß Figur 3 mit in die Nuten im Bund der Mutter eingerasteten Federarmen des Verbindungselementes;
- Figur 5: einen Schnitt längs der Linie V-V aus Figur 4;
- Figur 6: die Gestaltung von Bolzen und Mutter gemäß Figur 4, eingeschraubt in ein Bauteil und abgesetzt gegenüber einem anderen Bauteil;
- Figur 7: einen Schnitt ähnlich dem gemäß Figur 2.

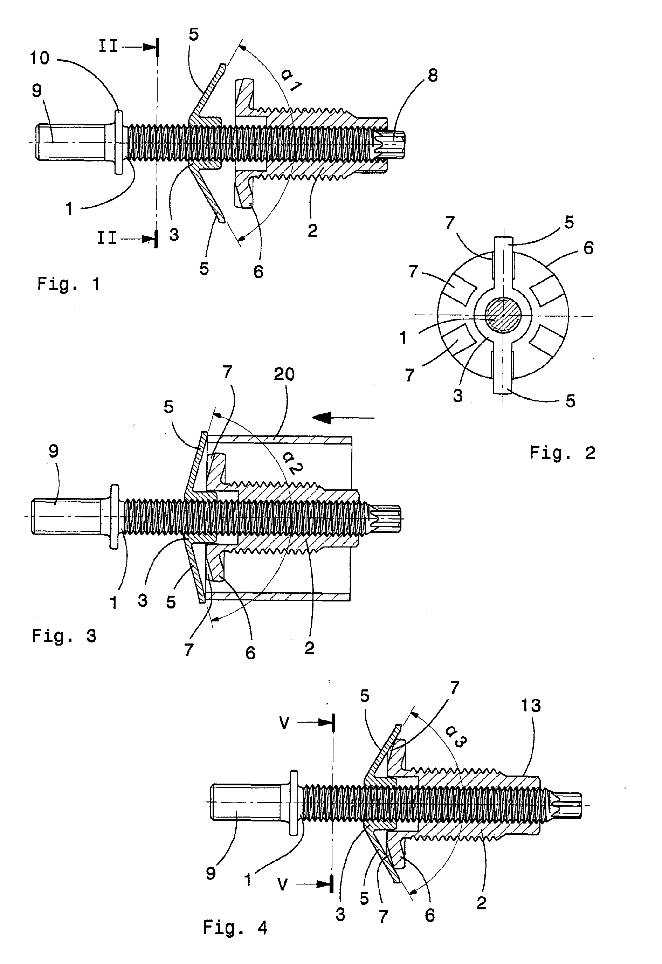

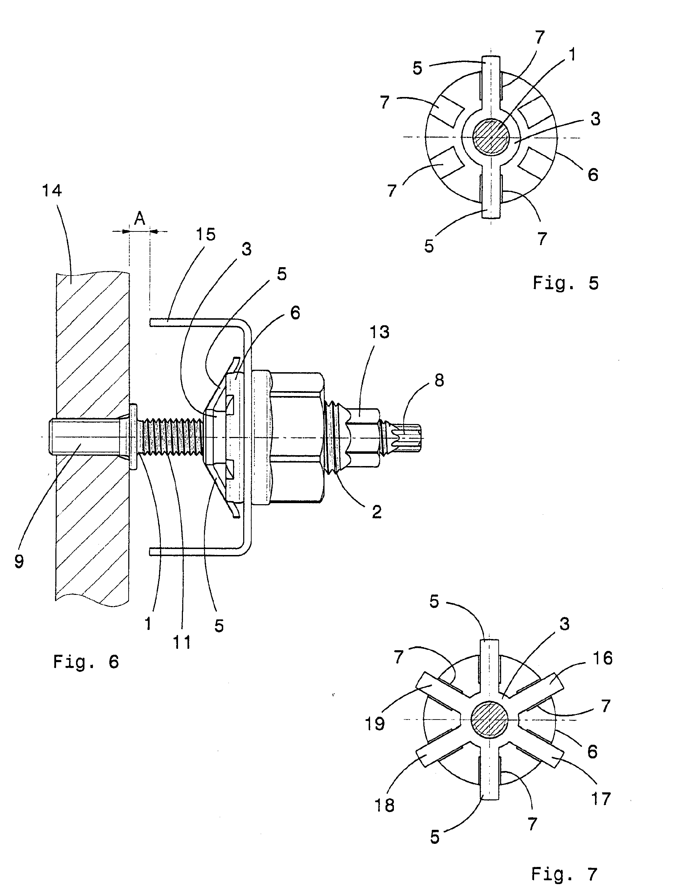

Figur 1 zeigt den Bolzen 1 mit aufgeschraubtem Verbindungselement 3 und auf ihn aufgeschraubter Mutter 2, die mit dem Bund 6 versehen ist. Der Bolzen 1 weist auf seiner einen Seite den Außentorx 8 auf, über den mittels eines entsprechenden Werkzeuges der Bolzen 1 in irgendein anderes Bauteil eingedreht werden kann (siehe Figur 6). Auf der gegenüberliegenden Seite des Torx 8 geht der Bolzen 1 in das Befestigungsgewinde 9 über, das von dem an den Torx 8 anschließenden Bewegungsgewinde des Bolzen 1 durch den Flansch 10 getrennt ist.

In der in der Figur 1 dargestellten Lage von Mutter 2 und Verbindungselement 3 ragen die beiden Federarme 5 ungespannt im Wesentlichen radial von dem Verbindungselement 3 weg. Das Verbindungselement 3 kann somit auf dem Bolzen 1 beliebig verdreht werden, insbesondere an den Bund 6 herangedreht werden, wobei sich Federarme 5 entsprechend unverspannt den Winkel α1 zwischen sich einschließen und von dem Bolzen 1 wegstrecken.

In der Figur 2 ist die Gestaltung gemäß Figur 1 im Schnitt längs der Linie II-II dargestellt. Daraus ergibt sich, dass von dem Verbindungselement 3 sich radial die beiden Federarme 5 wegspreizen, die dazu dienen, in entsprechende Nuten 7 im Bund 6 einzurasten (siehe Figur 4), wodurch dafür gesorgt wird, dass sich bei Verdrehung der Mutter 2 mit dem Bund 6 auch das Verbindungselement 3 mitdreht. Hierdurch ist gewährleistet, dass sich die axiale Lage von Verbindungselement 3 und Mutter 2 sich nicht ändert.

In der Figur 3 ist die gleiche Gestaltung, wie in Figur 1 gezeigt, dargestellt, wobei allerdings die Mutter 2 und das Verbindungselement 3 in einander angenäherter Lage gezeichnet sind. Bei dem Aufschrauben des Verbindungselementes 3 in Bezug auf die Mutter 2 nähern sich die weggespreizten Federarme 5 dem Bund 6 an, wobei sie weiter aufgespreizt gezeichnet sind, als in Figur 1 dargestellt. In diese in Figur 3 dargestellte, im Winkel α2 aufgespreizte Lage sind die Federarme 5 durch Druck auf die Hülse 20 z.B. von Hand gebracht worden. Damit kann die Mutter 2 mit ihrem Bund 6 beliebig an das Verbindungselement 3 angenähert werden.

In der Figur 4 ist die gleiche Gestaltung in einer anderen Phase wie in den Figuren 1 und 3 dargestellt, und zwar in einer Lage, die sich beim Aufschrauben des Verbindungselementes 3 auf den Bolzen 1 ergibt. Gemäß Darstellung in Figur 4 besitzt die Mutter 2 an ihrem dem Bund 6 abgewandten Ende den Sechskant 13, über den mit einem Werkzeug die Mutter 2 auf das Bewegungsgewinde 11 des Bolzens 1 verdreht werden kann. Wenn die Hülse 20 entfernt wird, nehmen die Federarme 5 den Winkel α3 ein und rasten automatisch in die entsprechenden Nuten 7 in dem Verbindungselement 3 ein, womit über die Federarme 5 die Drehverbindung zwischen dem Verbindungselement 3 und der Mutter 2 herbeigeführt ist.

In der Figur 5 ist die Anordnung gemäß Figur 4 in Schnitt längs der Linie V-V dargestellt, wobei gezeigt ist, dass das Verbindungselement 3 nur mit den beiden radial gegenüberliegenden Federarmen 5 ausgestattet ist.

Figur 6 zeigt die Gestaltung gemäß den vorstehend behandelten Figuren im Zusammenhang mit dem Einbau in verschiedene Bauteile. Dabei handelt es sich darum, den Abstand A zwischen Bauteil 14 gegenüber Bauteil 15 in der dargestellten Lage festzuhalten. Bei dem Bauteil 14 kann es sich z.B. um ein Karosserieteil eines Autos und ein demgegenüber in bestimmtem Abstand A festzuhaltendes Bauteil, z.B. die Halterung eines Rücklichtes eines Autos, handeln. Wenn dieser Abstand z.B. vergrößert werden soll, dann muss hierzu unter Eingriff in den Sechskant 13 die Mutter 2 entsprechend verschoben werden, womit dann das Bauteil 15 in entsprechender Weise von dem Bauteil 14 entfernt wird. Damit dies nicht ungewollt durch Erschütterungen oder sonstige Einflüsse von selbst geschehen kann, ist die erfindungsgemäße Verbindung zwischen dem Bolzen 1 und der Mutter 2 vorgesehen, durch die infolge entsprechend eingestellter Reibung zwischen Bolzen 1 und Mutter 2 erreicht wird, dass sich die Mutter 2 nicht ohne weiteres gegenüber dem Bolzen 1 verdrehen kann und damit den Abstand zwischen den beiden Bauteilen 14 und 15 verändern würde.

In der Figur 7 ist ein Schnitt ähnlich dem gemäß Figur 6 dargestellt. Aus dieser Darstellung ergibt sich, dass hier das Verbindungselement 3 mit sechs Federarmen 5, 16, 17, 18 und 19 versehen ist, die in entsprechende Nuten 7 im Bund 6 der Mutter 2 (siehe Figur 6) eingerastet sind und damit eine besonders sichere Verdrehsicherheit zwischen dem Verbindungselement 3 und der Mutter 2 herbeiführen.

## Patentansprüche

1. Verbindungselement (3) zur Einstellung des Verdrehmomentes zwischen einem Bolzen (1) und einer auf ihn aufgeschraubten Mutter (2), **dadurch gekennzeichnet, dass** das Verbindungselement (3) mit einem Muttergewinde (4) auf dem Bolzen (1) sitzt und mit radialen Federarmen (5) einen Bund (6) als Bestandteil der Mutter (2) diese axial gegenüber dem Bolzen (1) verspannt, wobei die Federarme (5) formschlüssig in dem Bund (6) derart gehalten sind, dass eine Verdrehung der Mutter (2) gegenüber dem Bolzen (1) das Verbindungselement (3) unter Überwindung des Verdrehmomentes mitdreht.

2. Verbindungselement nach Anspruch 1, **dadurch gekennzeichnet, dass** die Federarme (5) formschlüssig in Nuten (7) in dem Bund (6) einrasten,

3. Verbindungselement nach Anspruch 1 oder 2, **dadurch gekennzeichnet, dass** das Verdrehmoment durch den Abstand zwischen der auf den Bolzen (1) aufgeschraubten Mutter (2) und dem ebenfalls auf den Bolzen (1) aufgeschraubten Verbindungselement (3) einstellbar ist.

4. Verbindungselement nach Ansprüchen 1 bis 3, **dadurch gekennzeichnet, dass** die Mutter (2) aus Kunststoff besteht.
